# EUROPEAN PATENT SPECIFICATION

(11) **EP 3 312 921 B1**
(45) Date of publication and mention of the grant of the patent: **25.10.2023**
(21) Application number: 16811160.7
(22) Date of filing: 23.03.2016
(51) Int. Cl.: H01M 4/86, B01J 23/42, B01J 23/648, H01M 4/90, H01M 4/92, H01M 8/02, H01M 8/10, H01M 8/1004, H01M 8/1018

(54) **CELL, FUEL CELL STACK, FUEL CELL SYSTEM AND MEMBRANE-ELECTRODE JOINED BODY**
ZELLE, BRENNSTOFFZELLENSTAPEL, BRENNSTOFFZELLENSYSTEM UND VERBUNDENER MEMBRAN-ELEKTRODE-KÖRPER
PILE, EMPILEMENT DE PILES À COMBUSTIBLE, SYSTÈME DE PILE À COMBUSTIBLE ET CORPS ASSEMBLÉ PAR UN ENSEMBLE MEMBRANE-ÉLECTRODE

(30) Priority: 16.06.2015 JP 2015121434
(43) Date of publication of application: 25.04.2018
(73) Proprietor: Panasonic Holdings Corporation, Osaka 571-8501 (JP); National University Corporation University of Yamanashi, Yamanashi 400-8510 (JP)
(72) Inventor: SHINTANI, Haruhiko, Osaka-shi Osaka 540-6207 (JP); KAKINUMA, Katsuyoshi, Yamanashi 400-8510 (JP); UCHIDA, Makoto, Yamanashi 400-8510 (JP); WATANABE, Masahiro, Yamanashi 400-8510 (JP)
(74) Representative: Grünecker Patent- und Rechtsanwälte PartG mbB
(86) International application number: PCT/JP2016/001691
(87) International publication number: WO 2016/203679

(56) References cited:
- WO-A1-2009/060582
- WO-A1-2015/002287
- JP-A- H06 192 873
- JP-A- 2002 280 002
- JP-A- 2002 280 002
- JP-A- 2006 019 133
- JP-A- 2006 019 133
- JP-A- 2009 026 501
- JP-A- 2015 195 193
- JP-B2- 3 236 686
- US-A1- 2009 312 181
- US-A1- 2017 047 600

## Description

### Technical Field

The present invention relates to a cell, a fuel cell stack, a fuel cell system, and a membrane electrode assembly.

### Background Art

Conventionally, when the supply of a fuel gas to a polymer electrolyte fuel cell is stopped, the fuel gas remaining in a fuel gas channel may leak from the fuel gas channel, or may pass through a polymer electrolyte membrane. In such a case, air enters the fuel gas channel in place of the fuel gas. If the fuel cell is re-started in such a state, an oxygen reduction reaction occurs at the anode. This causes degradation of a catalyst used for the cathode. In order to avoid such catalyst degradation, at the time of re-starting the fuel cell, air remaining in the fuel gas channel is purged from the fuel gas channel by using an inert gas before the fuel gas is supplied to the fuel gas channel.

However, this method requires, for example, a tank for storing the inert gas and a device for controlling the supply of the inert gas, causing increase in the size and cost of the apparatus. For this reason, techniques of lowering the oxygen reduction capability of an anode catalyst layer have been proposed as methods that use no inert gas. For example, in the case of a fuel cell disclosed in Patent Literature 1, at least an oxygen-remaining portion of the anode catalyst layer is anti-corrosion treated in advance. In the case of a fuel cell disclosed in Patent Literature 2, the Tafel slope of the oxygen reduction reaction of the catalyst in the anode catalyst layer is higher than or equal to 73 mV/decade. JP 2002 280002 A relates to a solid polymer fuel cell. JP 2006 019133 A relates to an anode electrode for a fuel cell. JP 3 236686 B2 relates to a gas electrode. US 2009/312181 A1 relates to method of synthesizing a mesoporous catalyst support material comprising TiO2.

### Citation List

### Patent Literature

PTL 1: Japanese Laid-Open Patent Application Publication No. 2009-283369
PTL 2: Japanese Laid-Open Patent Application Publication No. 2011-82187

### Summary of Invention

### Technical Problem

However, in the fuel cells disclosed in Patent Literatures 1 and 2, there is still room for improvements in terms of power generation performance. An object of the present invention is to provide a fuel cell system capable of suppressing deterioration in power generation performance while suppressing increase in its size and cost.

### Solution to Problem

A cell according to the present invention is defined in claim 1. A fuel cell stack and a fuel cell system are defined in claims 10 and 11 respectively. A membrane electrode assembly is defined in claim 12. Further advantageous embodiments are defined in the dependent claims.

### Advantageous Effects of Invention

The present invention exerts, in a cell, a fuel cell stack, a fuel cell system, and a membrane electrode assembly, an advantageous effect of being able to suppress deterioration in power generation performance while suppressing increase in their size and cost.

The above object, other objects, features, and advantages of the present invention will be made clear by the following detailed description of preferred embodiments with reference to the accompanying drawings.

### Brief Description of Drawings

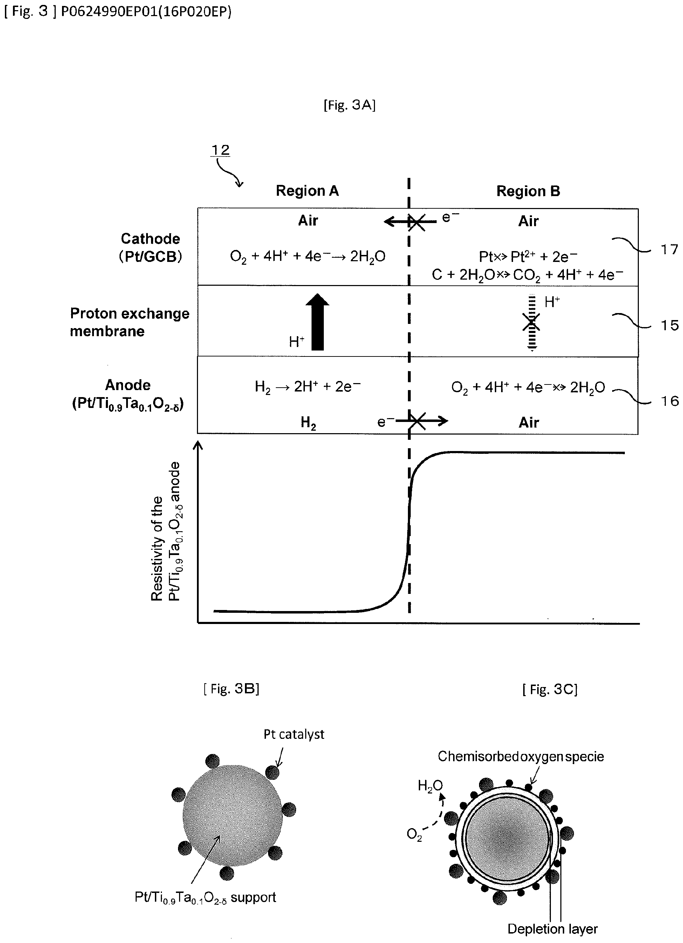

Fig. 1 is a functional block diagram schematically showing the configuration of a fuel cell system according to Embodiment 1 of the present invention.
Fig. 2 is a sectional view schematically showing a part of a fuel cell stack including cells of Fig. 1.
The upper part of Fig. 3A is a sectional view schematically showing a MEA; the lower part of Fig. 3A is a graph schematically showing the electrical resistance of a cell; Fig. 3B schematically shows a platinum/tantalum-doped titanium oxide under a hydrogen atmosphere; and Fig. 3C schematically shows the platinum/tantalum-doped titanium oxide under an oxygen atmosphere.

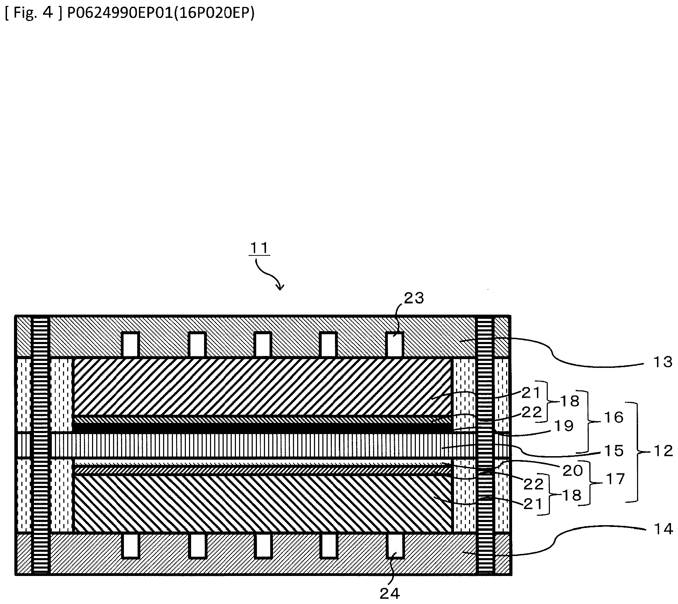

Fig. 4 is a sectional view schematically showing a cell of a working example.

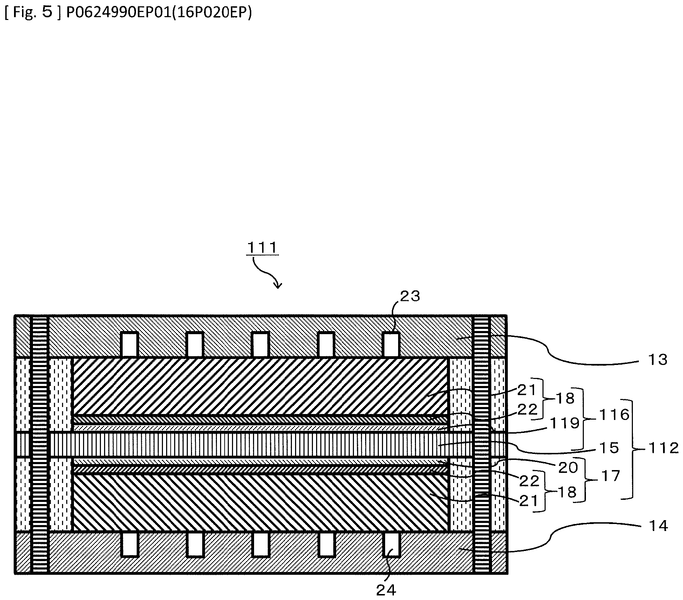

Fig. 5 is a sectional view schematically showing a cell of a comparative example.

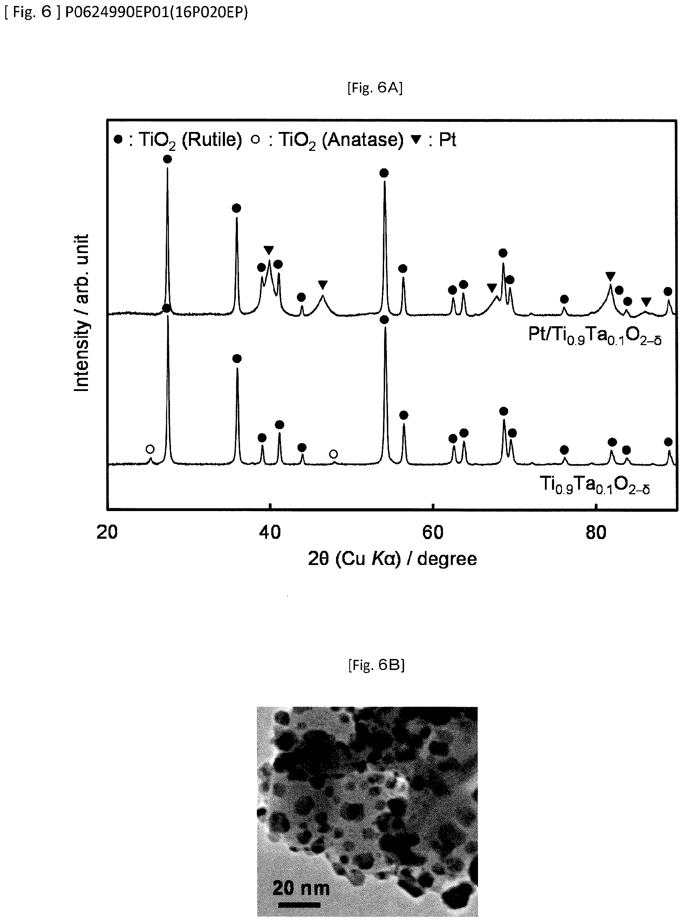

Fig. 6A shows spectra of results of X-ray diffraction (XDR) measurement performed on a tantalum-doped titanium oxide and a platinum/tantalum-doped titanium oxide; and Fig. 6B shows an image of the platinum/tantalum-doped titanium oxide captured by using a transmission electron microscope (TEM).

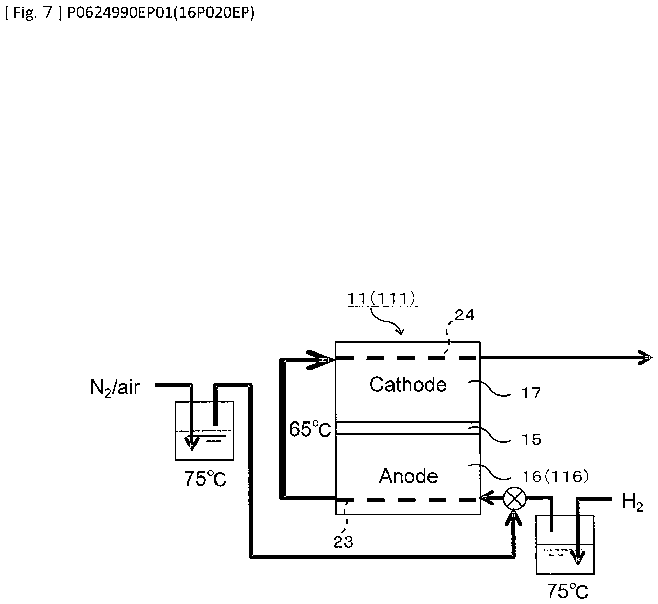

Fig. 7 schematically shows a measurement system for an electrical resistance evaluation test and a hydrogen pump test conducted under various gas atmospheres.

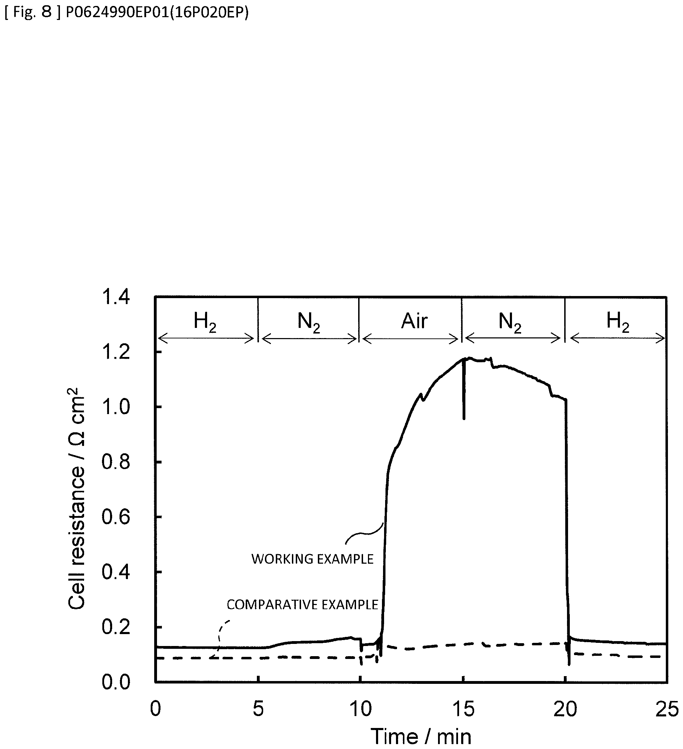

Fig. 8 is a graph showing the electrical resistance of each of the cell of the working example and the cell of the comparative example.

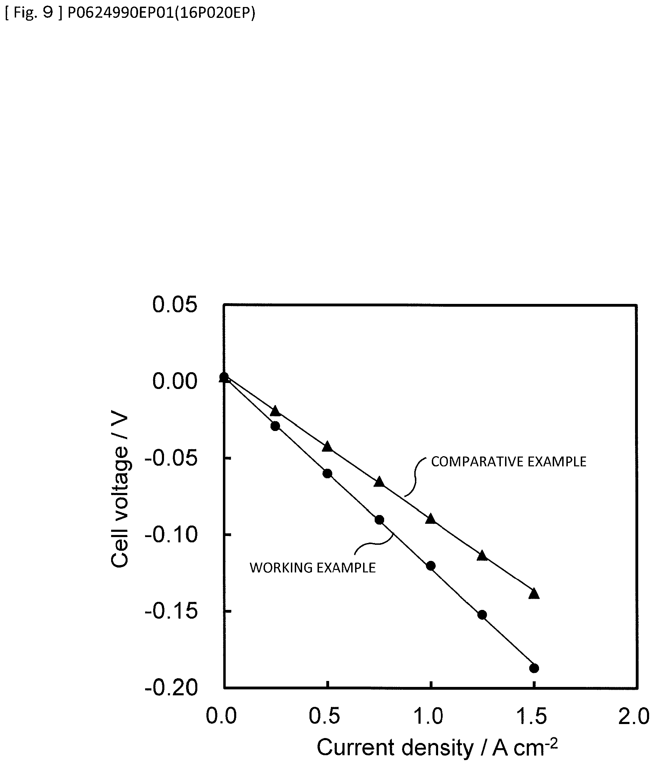

Fig. 9 is a graph showing voltage-current characteristics of each of the cell of the working example and the cell of the comparative example in the hydrogen pump test.

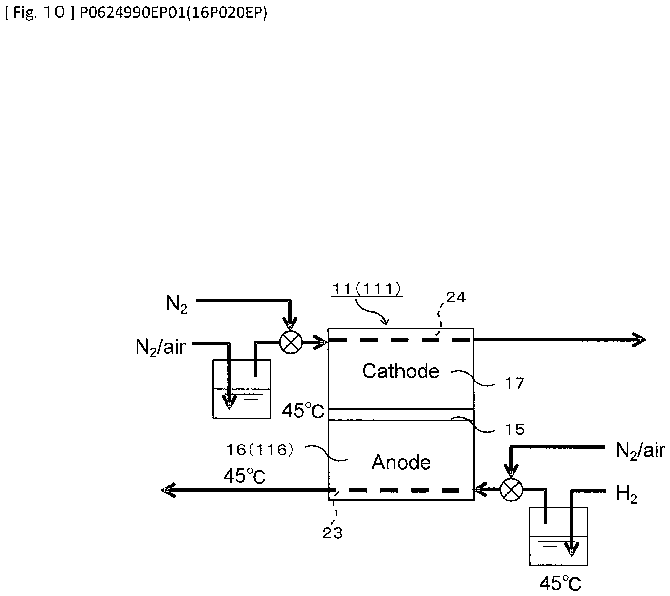

Fig. 10 schematically shows a measurement system for a gas replacement cycle test.

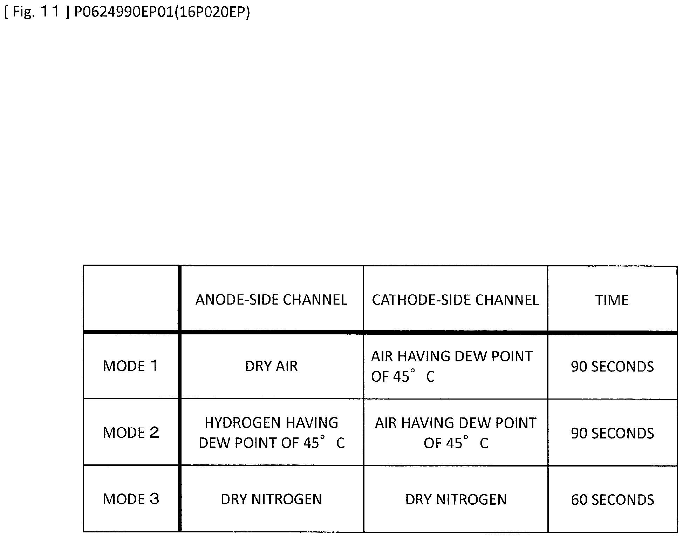

Fig. 11 is a table showing test conditions of the gas replacement cycle test.

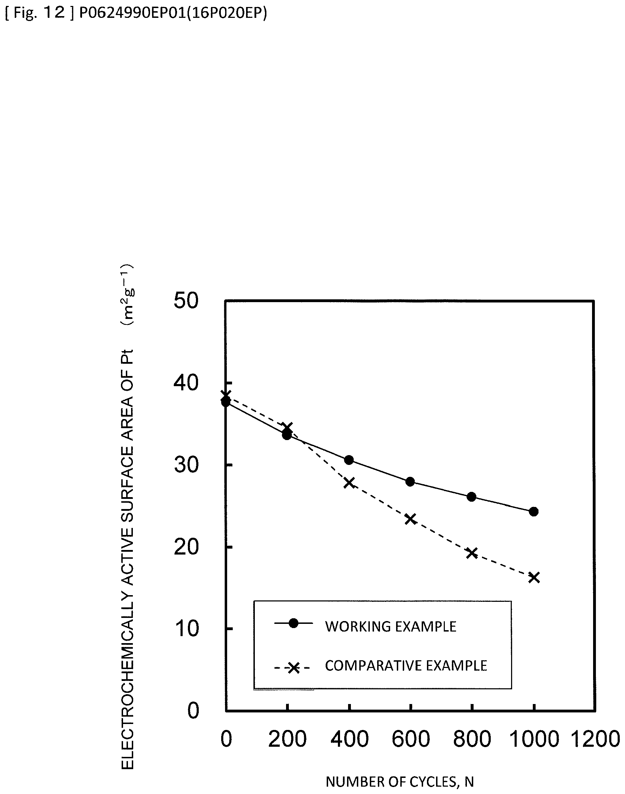

Fig. 12 is a graph showing a relationship between the number of gas replacement cycles and an electrochemically active surface area of Pt of the cathode of each of the cell of the working example and the cell of the comparative example.

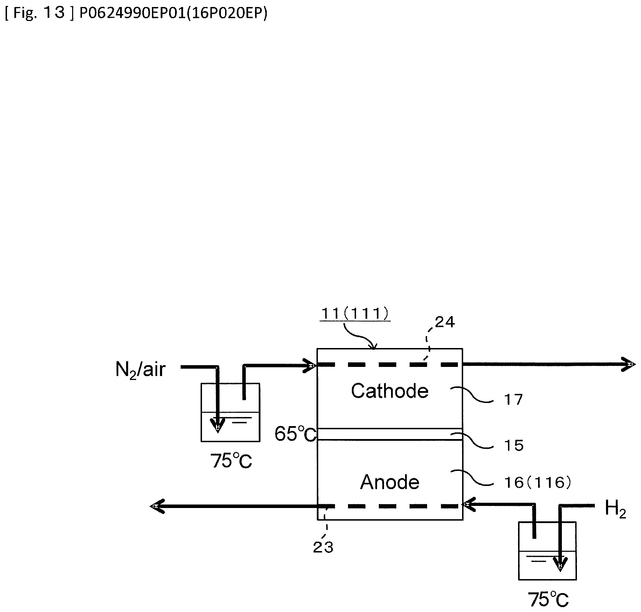

Fig. 13 schematically shows a measurement system for a power generation performance evaluation test conducted on the fuel cells.

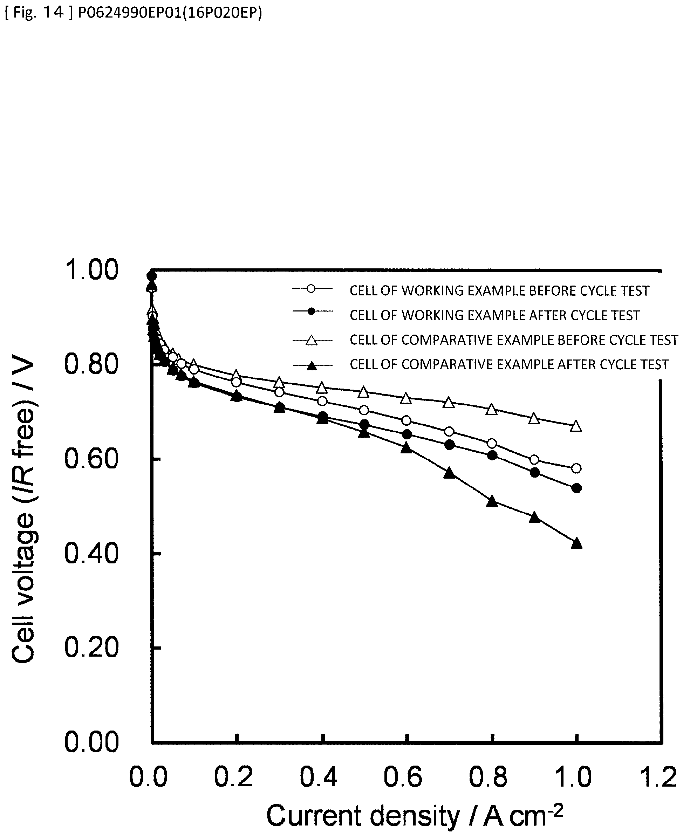

Fig. 14 is a graph showing voltage-current characteristics (IR free) of each of the cell of the working example and the cell of the comparative example in the power generation performance evaluation test.

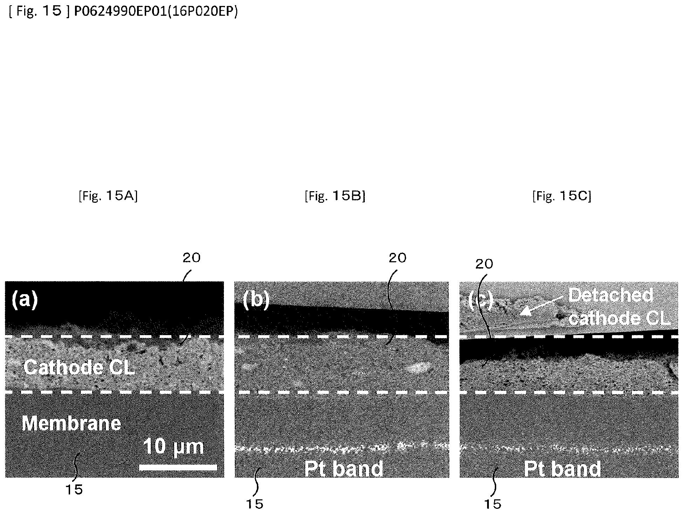

Fig. 15A is a sectional view of the cathode of the cell of the comparative example before the gas replacement cycle test; Fig. 15B is a sectional view of the cathode of the cell of the working example after the gas replacement cycle test; and Fig. 15C is a sectional view of the cathode of the cell of the comparative example after the gas replacement cycle test.

### Description of Embodiments

### (Findings on Which the Present Invention is Based)

The inventors of the present invention conducted diligent studies on a cell, a fuel cell stack, a fuel cell system, and a membrane electrode assembly from the viewpoint of suppressing deterioration in power generation performance while suppressing increase in their size and cost. As a result of the studies, the inventors of the present invention have found the following problems in the conventional art.

In a case where a fuel gas is supplied to a fuel gas channel in a state where air is present in the fuel gas channel, since the fuel gas fills the fuel gas channel from the upstream side, air may be left in the downstream part of the fuel gas channel in some cases. If the fuel cell is started in such a state, a power-generating reaction occurs in the upstream part of the fuel gas channel, which part is filled with the fuel gas. In the power-generating reaction, a hydrogen oxidation reaction of H₂ → 2H⁺ + 2e⁻ occurs at the anode, and a reaction of 2H⁺ + 1/2O₂ + 2e⁻ → H₂O occurs at the cathode.

Meanwhile, in the downstream part of the fuel gas channel, in which part the air remains, a cathode carbon corrosion reaction occurs. In the corrosion reaction, an oxygen reduction reaction of 2H⁺ + 1/2O₂ + 2e⁻ → H₂O occurs at the anode, and a reaction of 1/2C + H₂O → 1/2CO₂ + 2H⁺ + 2e⁻ occurs at the cathode. As a result, the cathode catalyst layer degrades, which causes deterioration in the power generation performance of the fuel cell.

In this respect, each of the fuel cells disclosed in Patent Literatures 1 and 2 suppresses the corrosion reaction by lowering the oxygen reduction capability of the anode catalyst layer. However, at the same time, hydrogen oxidation capability, which is the originally intended function of the anode catalyst layer, is also lowered, which consequently impairs the power generation performance of the fuel cell.

In view of the above, the inventors of the present invention conducted the diligent studies, and as a result of the studies, they have found that the deterioration in the power generation performance of the fuel cell can be suppressed by setting the electrical resistance of the anode under an oxygen atmosphere to be higher than the electrical resistance of the anode under a hydrogen atmosphere. Based on the findings, the inventors have conceived of the present invention.

### (Embodiments)

A cell according to the present invention is defined in claim 1.

A cell according to a second aspect of the present invention is configured such that, in the above first aspect, the anode catalyst layer contains an ion-conductive binder.

A cell according to a third aspect of the present invention is configured such that, in the above first or second aspect, the second electrically conductive material is carbon.

A cell according to a fourth aspect of the present invention is configured such that, in any one of the above first to third aspects, the first electrically conductive material is formed as particles, and an average primary diameter of the particles is not smaller than 10 nm and not greater than 1000 nm.

A cell according to a fifth aspect of the present invention is configured such that, in any one of the above first to fourth aspects, the first catalyst material contains platinum or a platinum alloy.

A cell according to a sixth aspect of the present invention is configured such that, in any one of the above first to fifth aspects, the first catalyst material is formed as particles, and an average primary diameter of the particles is not smaller than 1 nm and not greater than 10 nm.

A cell according to a seventh aspect of the present invention is configured such that, in any one of the above first to sixth aspects, the electrical resistance of the cell when the anode catalyst layer is under an oxygen atmosphere is nine times or more as high as the electrical resistance of the cell when the anode catalyst layer is under a hydrogen atmosphere. A cell according to an eighth and ninth aspect of the invention is defined in claims 8 and 9.

A fuel cell stack according to a tenth aspect of the present invention includes a plurality of the cells according to any one of the above first to ninth aspects, the cells being stacked together.

A fuel cell system according to an eleventh aspect of the present invention includes: a fuel cell stack including a plurality of the cells according to any one of claims 1 to 9, the cells being stacked together; a fuel gas supply device configured to supply a fuel gas to one channel of the pair of separators; and an oxidant gas supply device configured to supply an oxidant gas to another channel of the pair of separators.

A membrane electrode assembly according to the present invention is defined in claim 12.

Hereinafter, embodiments of the present invention are described in detail with reference to the drawings. In the drawings, the same or corresponding elements are denoted by the same reference signs, and repeating the same descriptions is avoided below.

### (Embodiment 1)

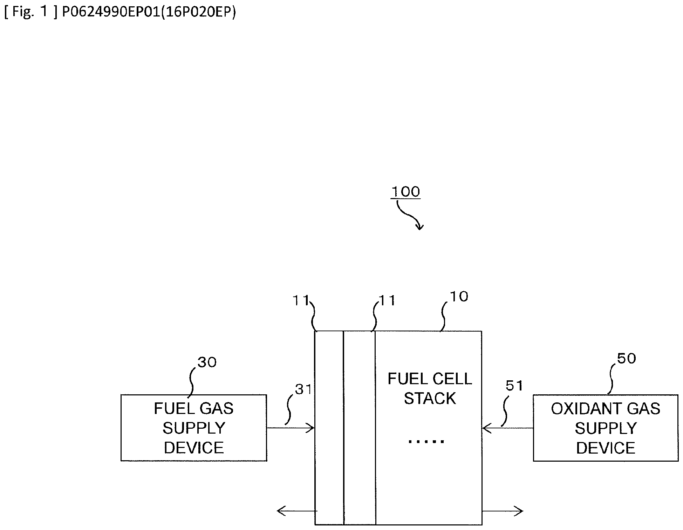

The configuration of a fuel cell system 100 according to Embodiment 1 is described with reference to Fig. 1. Fig. 1 is a functional block diagram schematically showing the configuration of the fuel cell system 100. The fuel cell system 100 includes a fuel cell stack 10, a fuel gas supply device 30, and an oxidant gas supply device 50.

The fuel cell stack 10 is a reactor configured to generate electric power by causing a hydrogen-containing fuel gas and an oxidant gas to electrochemically react with each other (hereinafter, such a reaction is referred to as a power-generating reaction). The fuel cell stack 10 includes a plurality of cells 11 that are stacked together.

The fuel gas supply device 30 is a device configured to supply the fuel gas to a channel of the fuel cell stack 10. The fuel gas supply device 30 is connected to the channel of the fuel cell stack 10 by a first passage 31, and the fuel gas is supplied to the fuel cell stack 10 through the first passage 31. The fuel gas supply device 30 has a function of adjusting the flow rate of the fuel gas, and the adjustment is performed by a controller (not shown). The fuel gas is a hydrogen-containing gas. Examples of the fuel gas supply device 30 include a reformer, a hydrogen cylinder, and a hydrogen gas infrastructure. The reformer is a reactor configured to generate the fuel gas from a raw material gas by a suitable method, such as a steam reforming method, a partial oxidation method, or an autothermal method.

The oxidant gas supply device 50 is a device configured to supply the oxidant gas to a channel of the fuel cell stack 10. The oxidant gas supply device 50 is connected to the channel of the fuel cell stack 10 by a second passage 51, and the oxidant gas is supplied to the fuel cell stack 10 through the second passage 51. The oxidant gas supply device 50 has a function of adjusting the feeding flow rate of the oxidant gas. This adjustment is performed by a controller (not shown). Examples of the oxidant gas include air and oxygen. Examples of the oxidant gas supply device 50 include an air blowing machine that feeds air, such as a fan or a blower, and an oxygen cylinder.

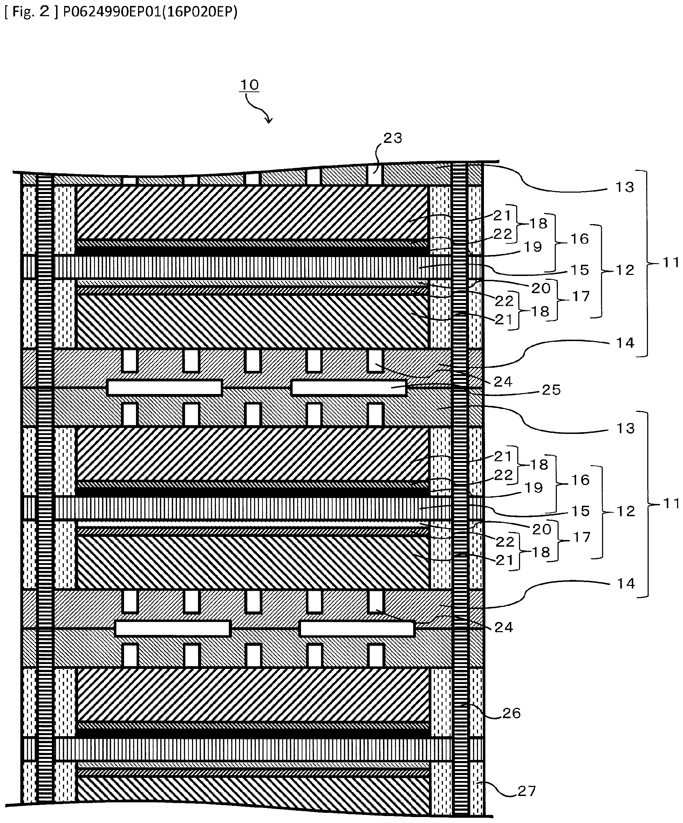

Next, the configuration of the fuel cell stack 10 including the cells 11 is described with reference to Fig. 2. Fig. 2 is a sectional view schematically showing a part of the fuel cell stack 10.

The fuel cell stack 10 is a stack of polymer electrolyte fuel cells, and generates electric power by causing an oxidation-reduction reaction between the fuel gas and the oxidant gas (this oxidation-reduction reaction is hereinafter referred to as a power-generating reaction). The fuel gas is a hydrogen-containing gas. As one example, air containing oxygen is used as the oxidant gas. The fuel cell stack 10 includes the plurality of cells 11 that are stacked together.

Each cell 11 is a cell having a resistance-changing property, i.e., the electrical resistance thereof changes depending on a gas type (between oxygen and hydrogen). The resistance-changing property herein means that the electrical resistance of the cell 11 when an anode 16 is under a hydrogen atmosphere, such as when the anode 16 is being exposed to, for example, the fuel gas, is different from the electrical resistance of the cell 11 when the anode 16 is under an oxygen atmosphere, such as when the anode 16 is being exposed to, for example, air containing oxygen.

The cell 11 includes: a membrane electrode assembly (MEA) 12; and a pair of plate-shaped separators 13 and 14, between which the MEA 12 is interposed. The MEA 12 includes a polymer electrolyte membrane 15, the anode 16, and a cathode 17.

The polymer electrolyte membrane 15 is made of a material that exhibits high electrical conductivity in wet conditions. For example, a proton (ion)-conductive ion-exchange membrane made of a fluorine-based resin is used as the polymer electrolyte membrane 15. The polymer electrolyte membrane 15 includes a first main surface and a second main surface. The second main surface is positioned at the opposite side to the first main surface. For example, each of the first main surface and the second main surface is rectangular, and the area of each of the first main surface and the second main surface is larger than the area of each of the other surfaces, i.e., the surfaces other than the first and second main surfaces, of the polymer electrolyte membrane 15.

Each of the anode 16 and the cathode 17 is an electrode that includes an electrically conductive catalyst support with a catalyst supported thereon. The anode 16 includes a gas diffusion layer 18 and a catalyst layer (anode catalyst layer) 19. The cathode 17 includes a gas diffusion layer 18 and a catalyst layer (cathode catalyst layer) 20.

Each gas diffusion layer 18 has a current collecting function, gas permeability, and water repellency, and includes a base 21 and a coating layer 22. The base 21 has a porous structure, and is made of an electrically conductive material having high gas and liquid permeability, for example, a carbonaceous material. The carbonaceous material is, for example, a carbon fibrous material, such as carbon paper, carbon fiber cloth, or carbon fiber felt. One coating layer 22 is interposed between the base 21 and the catalyst layer 19, and the other coating layer 22 is interposed between the base 21 and the catalyst layer 20. These coating layers 22 serve to reduce contact resistance between the base 21 and the catalyst layer 19 and between the base 21 and the catalyst layer 20, and improve liquid permeability (drainability). For example, each coating layer 22 is made of carbon black and a water repellent.

The anode catalyst layer 19 has a resistance-changing property, i.e., the electrical resistance thereof changes depending on oxygen and hydrogen. That is, the electrical resistance of the cell 11 when the anode catalyst layer 19 is under an oxygen atmosphere is higher than the electrical resistance of the cell 11 when the anode catalyst layer 19 is under a hydrogen atmosphere. For example, the electrical resistance of the cell 11 when the anode catalyst layer 19 is under an oxygen atmosphere is more than twice the electrical resistance of the cell 11 when the anode catalyst layer 19 is under a hydrogen atmosphere.

The electrical resistance ratio of the anode catalyst layer 19 is higher than the electrical resistance ratio of the cathode catalyst layer 20. The electrical resistance ratio of the anode catalyst layer 19 is the ratio of the electrical resistance of the anode catalyst layer 19 under an oxygen atmosphere to the electrical resistance of the anode catalyst layer 19 under a hydrogen atmosphere. The electrical resistance ratio of the cathode catalyst layer 20 is the ratio of the electrical resistance of the cathode catalyst layer 20 under an oxygen atmosphere to the electrical resistance of the cathode catalyst layer 20 under a hydrogen atmosphere.

The anode catalyst layer 19 is provided on the first main surface of the polymer electrolyte membrane 15. The anode catalyst layer 19 contains an ion-conductive binder, a first catalyst material, and a first electrically conductive material.

The first electrically conductive material has a resistance-changing property, and is, for example, an electrically conductive ceramic having a resistance-changing property. A metal oxide is used as the electrically conductive ceramic having a resistance-changing property. The metal oxide includes titanium oxide. Examples, not according to the invention, for the metal oxide include tin oxide, and indium oxide. Among these, an electrically conductive ceramic containing titanium is preferable from the viewpoint of chemical/electrochemical stability.

Preferably, the average primary diameter of the primary particles of the first electrically conductive material is, for example, not smaller than 10 nm and not greater than 1000 nm. If the particle diameter of the first electrically conductive material is smaller than 10 nm, contact resistance tends to occur between the particles, causing increase in the electrical resistance of the anode catalyst layer 19 under a hydrogen atmosphere. On the other hand, if the particle diameter of the first electrically conductive material is greater than 1000 nm, the electrical resistance of the anode catalyst layer 19 under an oxygen atmosphere is less likely to become high, and thus the resistance-changing property is reduced. In consideration of these, by setting the particle diameter of the first electrically conductive material to be not smaller than 10 nm and not greater than 1000 nm, the electrical resistance of the anode catalyst layer 19 can be made low under a hydrogen atmosphere and high under an oxygen atmosphere, and thus the resistance-changing property of the anode catalyst layer 19 can be exerted.

The shape of the primary particles of the first electrically conductive material is not particularly limited, so long as the shape allows the specific surface area of the catalyst support to be large. Various shapes are adoptable as the shape of the primary particles, such as a spherical shape, a polyhedral shape, a plate shape, a spindle shape, and a combination of these shapes. Among these, a spherical shape is preferable.

Preferably, the primary particles of the first electrically conductive material are fusion-bonded to each other to form a chain structure and/or a cluster structure. Considering the specific surface area of the catalyst support, contact resistance reduction, and conduction path formation, it is preferable that 80% or more of the fused bodies of the primary particles be formed by fusion bonding of five or more primary particles together.

Preferably, the specific surface area of the catalyst support made of the first electrically conductive material is, for example, not smaller than 1 m²/g and not larger than 100 m²/g. In consideration of reducing the particle diameter of the first catalyst material for effective catalyst utilization, it is more preferable that the specific surface area be not smaller than 10 m²/g and not larger than 100 m²/g. It should be noted that, in general, the specific surface area can be measured by using physical adsorption of, for example, nitrogen gas.

In addition, for the purpose of increasing the electrical conductivity of the first electrically conductive material, the electrically conductive ceramic may be doped with a dissimilar metal (a dopant). Examples of the dopant include niobium, tantalum, antimony, chromium, molybdenum, and tungsten.

Preferably, the dopant content in the electrically conductive ceramic is, for example, not less than 0.1 mol% and not more than 40 mol%. The electrical conductivity of the first electrically conductive material can be kept high when the dopant content is within this range. In order to further increase the electrical conductivity of the first electrically conductive material and make the specific surface area sufficiently large, it is preferable that the dopant content be not less than 0.5 mol% and not more than 30 mol%. It should be noted that the dopant content can be calculated by: analyzing a solution in which the anode catalyst layer 19 is dissolved by inductively coupled plasma atomic emission spectrometry or X-ray fluorescence (XRF) analysis; and measuring the concentration of the electrically conductive ceramic and the concentration of the dopant.

The first catalyst material is a material having an activity against a hydrogen oxidation reaction in the power-generating reaction. A noble metal and/or an alloy thereof is/are used as the first catalyst material. Examples of the noble metal include platinum (Pt), ruthenium (Ru), palladium (Pd), iridium (Ir), silver (Ag), and gold (Au). Among these, platinum and its alloys are preferable. For example, platinum and platinum alloys have an activity against the hydrogen oxidation reaction, and also, serve to increase the responsiveness of the change in electrical resistance. Therefore, in a case where platinum or a platinum alloy is supported on the surface of the electrically conductive ceramic of the anode catalyst layer 19, not only does the anode catalyst layer 19 function as the catalyst of the anode 16 of the fuel cell, but also exerts an excellent resistance-changing property.

The first catalyst material is formed as particles, and for example, the average primary diameter of the particles is preferably not smaller than 1 nm and not greater than 20 nm, and more preferably, not smaller than 1 nm and not greater than 10 nm.

Preferably, the first catalyst material is supported on the surface of the first electrically conductive material. Various methods are adoptable to make the first catalyst material supported on the surface of the first electrically conductive material. For example, a reductant is added to a liquid containing a colloidal precursor containing the first catalyst material, and thereby the precursor is reduced and a colloid containing the first catalyst material is formed. The first electrically conductive material is dispersed in the colloidal solution thus obtained, and thereby the first catalyst material is adsorbed to the surface of the first electrically conductive material. Thereafter, the first electrically conductive material with the first catalyst material adsorbed thereto is removed from the solution and dried, and subjected to heat treatment under a reductive atmosphere. In this manner, the first catalyst material can be made supported on the surface of the first electrically conductive material. Preferably, the heat treatment temperature at the time is, for example, not lower than 150°C and not higher than 1500°C. The reason why the heat treatment temperature is preferably not lower than 150°C is that under such conditions, impurities adhered to the surface of the first catalyst material are removed effectively, and a high catalytic activity can be obtained. Also, the reason why the heat treatment temperature is preferably not higher than 1500°C is that under such conditions, aggregation of the first catalyst material is suppressed, and a large surface area can be obtained. More preferably, the heat treatment temperature is not lower than 800°C and not higher than 1500°C. The reason why the heat treatment temperature is preferably not lower than 800°C is that under such conditions, the first catalyst material and the first electrically conductive material are partly alloyed, and thereby electron conductivity between the first catalyst material and the first electrically conductive material is improved.

The cathode catalyst layer 20 is provided on the second main surface of the polymer electrolyte membrane 15. The cathode catalyst layer 20 contains a second catalyst material and a second electrically conductive material. The second catalyst material is a catalyst having an activity against an oxygen reduction reaction. For example, platinum or a platinum alloy is used as the second catalyst material. The second electrically conductive material has no resistance-changing property, or has a lower resistance-changing property than that of the first electrically conductive material. For example, carbon black is used as the second electrically conductive material.

The pair of separators 13 and 14 is disposed in a manner to sandwich the MEA 12 between them. One separator (anode-side separator) 13 is provided in contact with the anode-side gas diffusion layer 18 of the MEA 12. The other separator (cathode-side separator) 14 is provided in contact with the cathode-side gas diffusion layer 18 of the MEA 12. Each separator 13 or 14 is made of a material having such properties as electrical conductivity, gas impermeability, thermal conductivity, and durability. For example, each separator 13 or 14 is made of compressed carbon, or made of a metal member such as stainless steel.

Groove-like first recesses are formed in one main surface of the anode-side separator 13, the one main surface facing the anode-side gas diffusion layer 18. The space surrounded by the first recesses and the anode-side gas diffusion layer 18 functions as a channel (anode-side channel) 23, through which a gas such as the fuel gas flows. The fuel gas supply device 30 (Fig. 1) is connected to the anode-side channel 23 by the first passage 31, and the fuel gas is supplied from the fuel gas supply device 30 to the anode-side channel 23.

Groove-like second recesses are formed in the other main surface of the anode-side separator 13, the other main surface facing in a direction that is opposite to the facing direction of the one main surface. The space surrounded by the second recesses and the cathode-side separator 14 adjacent to the other main surface of the anode-side separator 13 functions as a channel (cooling water channel) 25, through which water for cooling down the MEA 12 (cooling water) flows.

Groove-like third recesses are formed in one main surface of the cathode-side separator 14, the one main surface facing the gas diffusion layer 18. The space surrounded by the third recesses and the cathode-side gas diffusion layer 18 functions as a channel (cathode-side channel) 24, through which a gas such as the oxidant gas flows. The oxidant gas supply device 50 (Fig. 1) is connected to the cathode-side channel 24 by the second passage 51, and the oxidant gas is supplied from the oxidant gas supply device 50 to the cathode-side channel 24.

The plurality of cells 11 are stacked together, and thereby the adjoining cells 11 are electrically connected in series. The plurality of stacked cells 11 are fastened together by fastening members 26, such as bolts, with a predetermined pressure. This pressure fastening prevents leakage of the fuel gas and the oxidant gas, and reduces contact resistance. Between the anode-side separator 13 and the cathode-side separator 14, gaskets 27 are disposed in a manner to cover the side surfaces of the anode 16 and the cathode 17. In this manner, leakage of the fuel gas and the oxidant gas is prevented.

Next, a chemical reaction in the MEA 12 and a change in the electrical resistance of the anode 16 are described with reference to Fig. 3A, Fig. 3B, and Fig. 3C. The upper part of Fig. 3A shows a chemical reaction in the MEA 12. The lower part of Fig. 3A is a graph schematically showing the electrical resistance of the cell 11 in a case where a platinum/tanlalum-doped titanium oxide (Pt/Ti_{0.9}Ta_{0.1}O_{2-δ}) is used for the anode catalyst layer 19. Region A in Fig. 3A is a hydrogen-atmosphere region where the fuel gas is present at the anode 16. Region B in Fig. 3A is an oxygen-atmosphere region where air remains at the anode 16. Fig. 3B schematically shows the platinum/tantalum-doped titanium oxide that supports a platinum catalyst under a hydrogen atmosphere. Fig. 3C schematically shows the platinum/tantalum-doped titanium oxide that supports a platinum catalyst under an oxygen atmosphere.

First, a chemical reaction in a MEA whose anode has no resistance-changing property is described. In the MEA, the anode catalyst layer, which has no resistance-changing property, is made of an electrically conductive material having no resistance-changing property, such as carbon.

As shown in the upper part of Fig. 3A, in Region A, a reaction of H₂ → 2H⁺ + 2e' occurs at the anode 16, and thereby protons H⁺ and electrons e⁻ are generated. The generated protons H⁺ move to the cathode 17 through the electrolyte membrane 15. At the cathode 17, the protons H⁺ from the anode 16 and electrons e⁻ from the cathode 17 of Region B cause a reaction of O₂ + 4H⁺ + 4e⁻ → 2H₂O, and thereby water is generated. Also, the generated electrons e⁻ move to Region B.

Meanwhile, in Region B, a reaction of Pt → Pt²⁺ + 2e⁻ and a reaction of C + 2H₂O → CO₂ + 4H⁺ + 4e" occur at the cathode 17, and thereby protons H⁺ and electrons e⁻ are generated. The generated electrons e⁻ move to Region A. Also, the generated protons H⁺ move to the cathode 17 through the electrolyte membrane 15. At the anode 16, the protons H⁺ from the cathode 17 and the electrons e⁻ from Region A cause a reaction of O₂ + 4H⁺ + 4e⁻ → 2H₂O, and thereby water is generated. In the MEA with no resistance-changing property, these reactions progress, and as a result, platinum (Pt) of the second catalyst material and carbon (C) of the second electrically conductive material of the cathode 17 are corroded.

On the other hand, in the MEA 12 including the anode 16 having the resistance-changing property, as shown in the lower part of Fig. 3A, the electrical resistance of the cell 11 in Region B is higher than in Region A owing to oxygen species adsorbed to the surface of the platinum/tantalum-doped titanium oxide as shown in Fig. 3C.

Specifically, as shown in Fig. 3B, under a hydrogen atmosphere, the platinum catalyst is supported on the surface of the platinum/tantalum-doped titanium oxide, but nothing else is adsorbed to the surface of the platinum/tantalum-doped titanium oxide. On the other hand, as shown in Fig. 3C, under an oxygen atmosphere, oxygen is reduced on the surface of the platinum/tantalum-doped titanium oxide, and chemisorbed molecules such as charged oxygen species (O₂⁻, O⁻, O²⁻) are generated. These are adsorbed to the surface of the platinum/tantalum-doped titanium oxide, and thereby a depletion layer with band bending is formed on the surface. Due to the band bending, movement of electrons at the grain boundary and between the particles is hindered, and thereby the electrical resistance of the anode 16 increases. As a result, the catalytic activity of the anode 16 in Region B is lowered, and the reaction of O₂ + 4H⁺ + 4e⁻ → 2H₂O is less likely to occur. In accordance therewith, movement of protons H⁺ in Region B and the reactions of Pt → Pt²⁺ + 2e' and C + 2H₂O → CO₂ + 4H⁺ + 4e⁻ at the cathode 17 are suppressed, and thereby the corrosion of the second catalyst material and the second electrically conductive material in Region B is suppressed.

According to the above-described configuration, the electrical resistance of the cell 11 when the anode catalyst layer 19 is under an oxygen atmosphere is more than twice the electrical resistance of the cell 11 when the anode catalyst layer 19 is under a hydrogen atmosphere. Thus, the electrical resistance of the anode catalyst layer 19 is selectively increased under an oxygen atmosphere while the electrical resistance of the anode catalyst layer 19 is kept low under a hydrogen atmosphere. Further, the anode catalyst layer 19 of the present invention has both the hydrogen oxidation capability and the resistance-changing property. Since both of these functions are realized by the single layer, the electrical resistance under a hydrogen atmosphere in this configuration will not be higher than that in a conventional configuration. This makes it possible to prevent degradation of the cathode catalyst layer 20 due to the oxygen reduction capability of the anode catalyst layer 19, while improving the hydrogen oxidation capability of the anode catalyst layer 19, which affects the power generation efficiency of the fuel cell stack 10.

Moreover, the anode catalyst layer 19 contains the ion-conductive binder. Accordingly, ion (proton) conduction in the anode catalyst layer 19 is high, which makes effective catalyst utilization possible.

Furthermore, the first electrically conductive material is an electrically conductive ceramic having the resistance-changing property, and the second electrically conductive material is carbon. Carbon is excellent in terms of electrical conductivity, and the surface thereof is hydrophobic. Accordingly, since carbon is used as the second electrically conductive material, the cathode catalyst layer 20 containing the second electrically conductive material has an excellent current collecting function, and is less likely to be affected by flooding of water generated at the time of power generation. However, carbon exhibits almost no change in its electrical resistance regardless of the gas type. For this reason, when an oxygen reduction reaction occurs at the anode catalyst layer 19, the cathode catalyst layer 20 degrades. In this respect, by using the electrically conductive ceramic having the resistance-changing property as the first electrically conductive material, the oxygen reduction reaction at the anode catalyst layer 19 is suppressed, and thereby degradation of the cathode catalyst layer 20 can be suppressed. Further, by using the electrically conductive ceramic as the first electrically conductive material, the durability of the anode catalyst layer 19 can be improved.

Still further, the electrically conductive ceramic having the resistance-changing property contains titanium. The electrical resistance of the electrically conductive ceramic containing titanium easily changes between when it is under a hydrogen atmosphere and when it is under an oxygen atmosphere, and in addition, the electrically conductive ceramic containing titanium is chemically stable even when the fuel cell system is in operation.

Still further, the first electrically conductive material is formed as particles, and the average primary diameter of the particles (i.e., the particle diameter) is, for example, not smaller than 10 nm and not greater than 1000 nm. If the particle diameter of the first electrically conductive material is smaller than 10 nm, contact resistance tends to occur between the particles, causing increase in the electrical resistance of the anode catalyst layer 19 under a hydrogen atmosphere. On the other hand, if the particle diameter of the first electrically conductive material is greater than 1000 nm, the electrical resistance of the anode catalyst layer 19 under an oxygen atmosphere is less likely to become high, and thus the resistance-changing property is reduced. In consideration of these, by setting the particle diameter of the first electrically conductive material to be not smaller than 10 nm and not greater than 1000 nm, the electrical resistance of the anode catalyst layer 19 can be made low under a hydrogen atmosphere and high under an oxygen atmosphere, and thus the resistance-changing property of the anode catalyst layer 19 can be exerted.

Still further, the first catalyst material contains platinum or a platinum alloy. The platinum or platinum alloy is utilized as the hydrogen oxidation catalyst, and also, serves to increase the responsiveness of the change in electrical resistance. Therefore, by containing platinum or a platinum alloy in the first catalyst material, the power generation performance and resistance-changing property can be made excellent.

Still further, the first catalyst material is formed as particles, and the average primary diameter of the particles (i.e., the particle diameter) is not smaller than 1 nm and not greater than 10 nm. This makes it possible to make the surface area of the first catalyst material large, and realize high performance with a small catalyst amount.

Still further, the first catalyst material is supported on the surface of the first electrically conductive material having the resistance-changing property. This allows the first catalyst material, which has a small particle diameter, to be present stably.

The ratio of the electrical resistance of the anode catalyst layer 19 under an oxygen atmosphere to the electrical resistance of the anode catalyst layer 19 under a hydrogen atmosphere is higher than the ratio of the electrical resistance of the cathode catalyst layer 20 under an oxygen atmosphere to the electrical resistance of the cathode catalyst layer 20 under a hydrogen atmosphere. Thus, the electrical resistance of the cathode catalyst layer 20 does not change or hardly changes depending on the gas type. On the other hand, the electrical resistance of the anode catalyst layer 19 under an oxygen atmosphere is higher than the electrical resistance of the anode catalyst layer 19 under a hydrogen atmosphere.

Accordingly, in a part of the anode-side channel 23, in which part air is present, the electrical resistance of the anode catalyst layer 19 is high due to oxygen in the air. As a result, the oxygen reduction reaction is less likely to occur at the anode catalyst layer 19, and thereby degradation of the cathode catalyst layer 20 can be suppressed. This makes it possible to prevent deterioration in the power generation performance due to degradation of the cathode catalyst layer 20. In addition, in this case, the use of an inert gas is unnecessary, which makes it possible to prevent increase in cost and size in relation to suppressing the degradation of the cathode catalyst layer 20.

Meanwhile, in a part of the anode-side channel 23, the part being filled with the fuel gas, the electrical resistance of the anode catalyst layer 19 is lower than in the part of the anode-side channel 23, in which part air is present, and the hydrogen oxidation capability is not lowered or hardly lowered. Also, even when the oxidant gas, such as air, is supplied to the cathode-side channel 24, the electrical resistance of the cathode catalyst layer 20 does not increase or hardly increases. Therefore, the power-generating reaction is not hindered, and deterioration in the power generation performance can be suppressed.

It should be noted that, in the above-described configuration, every one of the cells in the fuel cell stack 10 is configured as the cell 11 having the resistance-changing property. However, it will suffice if at least one of the cells in the fuel cell stack 10 is configured as the cell 11 having the resistance-changing property. That is, the fuel cell stack 10 may include a cell that has no resistance-changing property or has a lower resistance-changing property than that of the cell 11.

### (Working Example)

An electrical resistance evaluation test, a hydrogen pump test, a power generation performance evaluation test, and a gas replacement cycle test were conducted on the cell 11 of a working example and a cell 111 of comparative example. First, methods of fabricating the cell 11 of the working example and the cell 111 of comparative example used in the above tests are described below. Fig. 4 is a sectional view schematically showing the cell 11 of the working example. Fig. 5 is a sectional view schematically showing the cell 111 of the comparative example.

The first electrically conductive material of the anode catalyst layer 19 of the MEA 12 of the cell 11 of the working example was prepared in the following manner. First, octylic acid titanium (2-ethylhexanoic acid titanium) and octylic acid tantalum (2-ethylhexanoic acid tantalum) were mixed such that the titanium-tantalum ratio was 10:1. The resulting mixture was dissolved in turpentine to prepare a precursor solution. Then, the precursor solution was sprayed by a sprayer into a flame at the rate of 3 g/min. At the time, propane, air, and oxygen were fed at the rates of 1 L/min, 5 L/min, and 9L/min, respectively, and thereby a flame of 1000°C to 1600°C was generated. In this manner, the solvent in the precursor solution was evaporated instantaneously, and thereby fine particles were produced. The produced fine particles were collected by using a FIEPA filter. These fine particles were subjected to heat treatment at 850°C for two hours in an electric furnace, into which argon gas containing 4% of hydrogen was fed. In this manner, a tantalum-doped titanium oxide (Ti_{0.9}Ta_{0.1}O_{2-δ}) containing 10% of tantalum by atomic ratio was synthesized and used as the first electrically conductive material.

Next, the material of the anode catalyst layer 19 was prepared by using the synthesized first electrically conductive material in the following manner. First, 15.6 g of sodium hydrogen sulfite was dissolved in 300 mL of ultrapure water. Then, 5 ml of a chloroplatinate solution with a platinum concentration of 200.34 g/L was added thereto, and the resulting solution was stirred sufficiently. Thereafter, ultrapure water was added to dilute the solution, such that the total solution amount was adjusted to 1400 mL. Then, while an aqueous solution containing 5% of sodium chloride was being dripped into the diluted solution such that the pH of the solution was always adjusted to 5, 120 ml of an aqueous solution containing 31% of hydrogen peroxide was dripped into the solution at the rate of 2 mL/min. In this manner, a platinum colloidal solution was prepared.

Then, 4 g of the previously prepared tantalum-doped titanium oxide (Ti_{0.9}Ta_{0.1}O_{2-δ}), i.e., the first electrically conductive material, was added to 300 mL of ultrapure water, and dispersed therein by ultrasonic dispersion. The resulting solution was mixed with the platinum colloidal solution, which was then subjected to ultrasonic dispersion and agitation. Then, the platinum colloidal solution with Ti_{0.9}Ta_{0.1}O_{2-δ} dispersed therein was stirred for one hour on a hot stirrer while keeping the temperature of the solution to 80°C. Thereafter, the stirred solution was cooled down to an ordinary temperature, and then stirred all night. The resulting solution was filtered by a membrane filter. Ultrapure water and ethanol were fed to the filtrate, which was then filtered. In this manner, the filtrate was washed four times. The resulting paste-like substance was dried at 80°C, and thereby an aggregate of Ti_{0.9}Ta_{0.1}O_{2-δ} with fine platinum particles supported thereon was obtained.

The aggregate was ground into a powder in a mortar. The powder was heat-treated at 900°C for two hours in an electric furnace, into which argon gas containing 4% of hydrogen was fed. In this manner, a tantalum-doped titanium oxide (Pt/Ti_{0.9}Ta_{0.1}O_{2-δ}) with platinum supported thereon was obtained as the material of the anode catalyst layer 19. It should be noted that the platinum-carrying rate (wt%) of Pt/Ti_{0.9}Ta_{0.1}O_{2-δ} was confirmed to be 19.8 wt% as a result of ICP analysis.

Next, by using the material (Pt/Ti_{0.9}Ta_{0.1}O_{2-δ}) of the anode catalyst layer 19, the MEA was fabricated in the following manner. First, the polymer electrolyte membrane 15 (GORE-SELECT III manufactured by W. L. Gore & Associates, Co., Ltd.; GORE-SELECT is a registered trademark of W. L. Gore & Associates, Inc.) was prepared.

Then, 1.0 g of the material (Pt/Ti_{0.9}Ta_{0.1}O_{2-δ}) of the anode catalyst layer 19, which was prepared in advance, and 0.69 g of a binder solution containing 27.4 wt% of PFSA were added to a mixed solvent of 34.2 g of water and 34.1 g of ethanol. From the resulting liquid mixture, dispersion slurry for the anode catalyst layer 19 was prepared by using a wet jet mill.

The prepared dispersion slurry was applied to the first main surface of the polymer electrolyte membrane 15 on a hot plate whose temperature was kept to 60°C, and thereby the anode catalyst layer 19 was formed. At the time, the application amount of the dispersion slurry was adjusted, such that the amount of platinum contained in the anode catalyst layer 19 was 0.1 mg/cm².

Also, 5.0 g of platinum-supported graphitized KetjenBlack (TEC10EA50E manufactured by Tanaka Kikinzoku Kogyo K.K.) and 7.9 g of a binder solution containing 27.4 wt% of PFSA were added to a mixed solvent of 42.4 g of water and 41.3 g of ethanol. From the resulting liquid mixture, dispersion slurry for the cathode catalyst layer 20 was prepared by using a wet jet mill.

The prepared dispersion slurry was applied to the second main surface of the polymer electrolyte membrane 15 on a hot plate whose temperature was kept to 60°C, and thereby the cathode catalyst layer 20 was formed. At the time, the application amount of the dispersion slurry was adjusted, such that the amount of platinum contained in the cathode catalyst layer 20 was 0.3 mg/cm².

In this manner, a membrane-catalyst layer assembly was fabricated. Then, the gas diffusion layer 18 (GDL25BC manufactured by SGL CARBON JAPAN CO., LTD.) was placed on each of the anode catalyst layer 19 and the cathode catalyst layer 20, and a pressure of 7 kgf/cm² was applied thereto for 30 minutes at a high temperature of 120°C. As a result, the MEA 12 of the cell 11 of the working example was fabricated.

Then, as shown in Fig. 4, the MEA 12 was set to a jig, and thereby the cell 11 of the working example was fabricated. The jig was provided with the anode-side separator 13 and the cathode-side separator 14 in advance. The anode-side channel 23 in a serpentine shape was formed in the anode-side separator 13 in advance, and the cathode-side channel 24 in a serpentine shape was formed in the cathode-side separator 14 in advance.

The method of fabricating a MEA 112 of the cell 111 of the comparative example shown in Fig. 5 is the same as the method of fabricating the MEA 12 of the cell 11 of the working example except the method of forming an anode catalyst layer 119 of an anode 116. Therefore, except the method of forming the anode catalyst layer 119, the description of the MEA fabrication method of the comparative example is omitted. The anode catalyst layer 119 of the comparative example is the same as the cathode catalyst layer 20 of the working example except the amount of platinum contained in the catalyst layer.

Specifically, 5.0 g of platinum-supported graphitized KetjenBlack (TEC10EA50E manufactured by Tanaka Kikinzoku Kogyo K.K.) and 7.9 g of a binder solution containing 27.4 wt% of PFSA were added to a mixed solvent of 42.4 g of water and 41.3 g of ethanol. From the resulting liquid mixture, dispersion slurry for the anode catalyst layer 119 was prepared by using a wet jet mill.

The prepared dispersion slurry was applied to the first main surface of the polymer electrolyte membrane 15 on a hot plate whose temperature was kept to 60°C, and thereby the anode catalyst layer 119 was formed. At the time, the application amount of the dispersion slurry was adjusted, such that the amount of platinum contained in the anode catalyst layer 119 was 0.1 mg/cm².

Next, the crystal structure of each of the prepared tantalum-doped titanium oxide (Ti_{0.9}Ta_{0.1}O_{2-δ}) and platinum/tantalum-doped titanium oxide (Pt/Ti_{0.9}Ta_{0.1}O_{2-δ}) is described with reference to Fig. 6A and Fig. 6B. Fig. 6A shows spectra of results of X-ray diffraction (XDR) measurement performed on the tantalum-doped titanium oxide and the platinum/tantalum-doped titanium oxide. The upper spectrum of Fig. 6A represents the diffraction intensity of the platinum/tantalum-doped titanium oxide, and the lower spectrum of Fig. 6A represents the diffraction intensity of the tantalum-doped titanium oxide. Fig. 6B shows an image of the platinum/tantalum-doped titanium oxide captured by using a transmission electron microscope (TEM).

In each of the upper spectrum and the lower spectrum of Fig. 6A, high-intensity diffraction peaks at 28°, 36°, and 55° were identified as (110), (101), and (211) planes of a rutile type titanium oxide, respectively.

The image of the platinum/tantalum-doped titanium oxide shown in Fig. 6B, which was captured by the TEM, indicates that platinum was uniformly dispersed on the surface of the tantalum-doped titanium oxide. The sizes of 500 respective platinum particles were measured from a plurality of images including the image of Fig. 6B. As a result of the measurement, the average particle diameter and particle size distribution of the platinum were 6.2 ± 1.9 nm. The platinum-carrying rate measured by an inductively coupled plasma mass spectrometer (ICP-MS) was 19.8% by mass.

Next, the electrical resistance evaluation test is described with reference to Fig. 7 and Fig. 8. Fig. 7 schematically shows a measurement system for the electrical resistance evaluation test, which was conducted under various gas atmospheres. Fig. 8 is a graph showing changes in the electrical resistance of each of the cell 11 of the working example and the cell 111 of the comparative example under the various gas atmospheres. The vertical axis of the graph indicates electrical resistance, and the horizontal axis of the graph indicates time.

As shown in Fig. 7, while the temperatures of the cell 11 of the working example and the cell 111 of the comparative example were kept to 65°C, the same gas having a dew point of 75°C was supplied to the anode 16, the anode 166, and the cathodes 17 at the flow rate of 2 L/min. Here, three types of gases that are hydrogen, nitrogen, and air were used. The electrical resistances of the respective cells 11 and 111 under each gas atmosphere were measured by a low resistance meter having a fixed frequency of 1 kHz.

As shown in Fig. 8, the electrical resistance of the cell 11 of the working example exhibited a low value in the case where hydrogen was supplied. In the case where air was supplied, the electrical resistance of the cell 11 increased rapidly to a value that is about nine times as high as in the case where hydrogen was supplied. Thus, the electrical resistance of the cell 11 when the anode catalyst layer 19 was under an oxygen atmosphere was nine times or more as high as the electrical resistance of the cell 11 when the anode catalyst layer 19 was under a hydrogen atmosphere.

On the other hand, the electrical resistance of the cell 111 of the comparative example in the case where air was supplied was about twice as high as in the case where hydrogen was supplied. That is, the difference in the electrical resistance due to the difference in the gas atmosphere was small. Thus, it is understood that in the case of the cell 11 including the anode catalyst layer 19, the electrical resistance under an oxygen atmosphere increased from the electrical resistance under a hydrogen atmosphere to a greater degree than in the case of the cell 111 including the anode catalyst layer 119. That is, the electrical resistance of the cell 11 when the anode catalyst layer 19 was under an oxygen atmosphere was more than twice the electrical resistance of the cell 11 when the anode catalyst layer 19 was under a hydrogen atmosphere.

The reason for this is considered that, in the cell 11 of the working example, oxygen in the air adsorbed to the tantalum-doped titanium oxide (Ti_{0.9}Ta_{0.1}O_{2-δ}) used as the support of the anode catalyst layer 19, and thereby the electrical resistance increased. On the other hand, in the cell 111 of the comparative example, it is considered that there was almost no adsorption of oxygen and others to the graphitized KetjenBlack (carbon black) used as the support of the anode catalyst layer 119, and for this reason, there was almost no change in the electrical resistance.

Next, evaluation of the hydrogen oxidation activity of the anode catalyst layer, the evaluation using a hydrogen pump test method, is described with reference to Fig. 7 and Fig. 9. Fig. 7 schematically shows a measurement system for the hydrogen pump test. Fig. 9 is a graph showing voltage-current characteristics of each of the cell 11 of the working example and the cell 111 of the comparative example in the hydrogen pump test. The vertical axis of the graph indicates voltage (V), and the horizontal axis of the graph indicates current (A/cm²).

As shown in Fig. 7, while the temperatures of the cell 11 of the working example and the cell 111 of the comparative example were kept to 65°C, hydrogen having a dew point of 75°C was supplied to the anode 16, the anode 117, and the cathodes 17 at the flow rate of 2 L/min. At the time, the voltage of each of the cells 11 and 111 during their constant current operation was measured by using an electronic load unit (PLZ-664WA manufactured by KIKUSUI ELECTRONICS CORP.) and a regulated DC power supply (PS20-60A manufactured by TEXIO TECHNOLOGY CORPORATION). During the hydrogen pump test measurement, the electrical resistance of each of the cells 11 and 111 was measured in situ by a low resistance meter having a fixed frequency of 1 kHz.

As a result of the hydrogen pump test measurement, as shown in Fig. 9, since the voltage of each of the cells 11 and 111 is proportional to the current, the voltage of each of the cells 11 and 111 depends on the electrical resistance. Thus, even though the platinum/tantalum-doped titanium oxide is used for the anode 16 of the cell 11, the voltage-current characteristics of the cell 11 are not be affected by any factor other than the electrical resistance.

From the graph of voltage-current characteristics shown in Fig. 9, the electrical resistance of each of the cells 11 and 111 in a steady state (the electrical resistance measured in the hydrogen pump test) was obtained. The electrical resistance of the cell 11 was 0.125 Ωcm², and the electrical resistance of the cell 111 was 0.094 Ωcm². Each of these electrical resistances contains: charge transfer resistances due to oxidation and reduction of hydrogen at the anode 16 or 116 and the cathode 17; and electrical resistances of the polymer electrolyte membrane 15, the catalyst layers 19 or 119 and 20 (Fig. 4, Fig. 5), the gas diffusion layers 18, and the separators 13 and 14. Among these, the electrically conductive material of the anode catalyst layer 19 of the anode 16 of the cell 11 is different from the electrically conductive material of the anode catalyst layer 119 of the anode 116 of the cell 111.

The electrical resistance of the cell 11 and the electrical resistance of the cell 111 measured in situ at 1.5 mAcm² by the low resistance meter having a fixed frequency of 1kHz were 0.123 Ωcm² and 0.092 Ωcm², respectively. Each of these electrical resistances measured in this manner mainly corresponds to the electrical resistances of the polymer electrolyte membrane 15, the catalyst layers 19 or 119 and 20 (Fig. 4 and Fig. 5), the gas diffusion layers 18, and the separators 13 and 14.

In each of the cells 11 and 111, the difference between the electrical resistance measured in the hydrogen pump test and the electrical resistance measured in situ by the low resistance meter having a fixed frequency of 1kHz was 2 mQcm². This difference corresponds to the charge transfer resistances due to oxidation and reduction of hydrogen at the anode 16 or 116 and the cathode 17, and is the same in each of the cells 11 and 111. Since each of the cells 11 and 111 includes the same cathode 17, the charge transfer resistance due to the hydrogen reduction at the cathode 17 is the same in each of the cells 11 and 111. Therefore, the hydrogen oxidation activity at the anode 16 and the hydrogen oxidation activity at the anode 116 are substantially the same degree of activity, and in both cases, overvoltage can be ignored.

Next, a durability evaluation test using gas replacement cycles is described with reference to Fig. 10, Fig. 11, and Fig. 12. Fig. 10 schematically shows a measurement system for the gas replacement cycle test. Fig. 11 is a table showing test conditions of the gas replacement cycle test. Fig. 12 is a graph showing a relationship between the number of gas replacement cycles of each of the cell 11 of the working example and the cell 111 of the comparative example and the electrochemically active surface area of Pt of the cathode 17. The vertical axis of the graph indicates the electrochemically active surface area (ECSA) of Pt of the cathode, and the horizontal axis of the graph indicates the number of cycles in first to third modes.

As shown in Fig. 10, the temperature of the cell 11 of the working example and the temperature of the cell 111 of the comparative example were kept to 45°C. Then, a first mode treatment shown in Fig. 12 was performed, in which non-humidified dry air was supplied to the anode-side channel 23 of each of the cells 11 and 111 for 90 seconds, and humidified air having a dew point of 45°C was supplied to the cathode-side channel 24 of each of the cells 11 and 111 for 90 seconds. After the first mode, a second mode treatment was performed, in which humidified hydrogen having a dew point of 45°C was supplied to the anode-side channel 23 of each of the cells 11 and 111 for 90 seconds, and humidified air having a dew point of 45°C was supplied to the cathode-side channel 24 of each of the cells 11 and 111 for 90 seconds. After the second mode, a third mode treatment was performed, in which non-humidified dry nitrogen was supplied to the anode-side channel 23 of each of the cells 11 and 111 for 60 seconds, and non-humidified dry nitrogen was supplied to the cathode-side channel 24 of each of the cells 11 and 111 for 60 seconds.

The series of first to third mode treatments as one cycle was repeated. Then, each time 200 cycles of the series of first to third mode treatments had been performed, ECSA (m²g⁻¹) of platinum (Pt) of the cathode catalyst layer 20 of each of the cell 11 of the working example and the cell 111 of the comparative example was measured. The ECSA of Pt was calculated by dividing the amount of electricity derived from hydrogen adsorption to Pt by the theoretical value (0.21 mC/cm²) of the amount of electricity derived from hydrogen adsorption to Pt per unit surface area of Pt. The amount of electricity derived from hydrogen adsorption to Pt was measured by cyclic voltammetry, in which the cathode-side separator 14 was used as the working electrode, and the anode-side separator 13 was used as the counter electrode and the reference electrode. During the measurement, each of the cells 11 and 111 was placed in a temperature environment of 45°C; humidified hydrogen gas having a dew point of 45°C was supplied to the anode-side channel 23; and humidified nitrogen gas having a dew point of 45°C was supplied to the cathode-side channel 24.

As shown in Fig. 12, in accordance with increase in the number of repeated treatment cycles, each of the cell 11 of the working example and the cell 111 of the comparative example exhibited decrease in ECSA of Pt. As the number of treatment cycles increased, the rate of decrease in ECSA of the cell 111 of the comparative example became higher than the rate of decrease in ECSA of the cell 11 of the working example. The ECSA retention of the cell 11 after 1000 cycles was 64.7%, whereas the ECSA retention of the cell 111 after 1000 cycles was 42.4%. As a result, in the cell 11 of the working example, decrease in the catalytic activity of the platinum of the cathode catalyst layer 20 was less than in the cell 111 of the comparative example.

Next, the power generation performance evaluation test is described with reference to Fig. 13 and Fig. 14. Fig. 13 schematically shows a measurement system for the power generation performance evaluation test. Fig. 14 is a graph showing voltage-current characteristics (IR free) of each of the cell 11 of the working example and the cell 111 of the comparative example in the power generation performance evaluation test. The vertical axis of the graph indicates IR free voltage (V) and the horizontal axis of the graph indicates current (A/cm²).

As shown Fig. 13, the temperatures of the cell 11 of the working example and the cell 111 of the comparative example were kept to 65°C. Hydrogen having a dew point of 65°C was fed to each of the anode 16 and the anode 116 at such a flow rate that the hydrogen utilization was 70%, and air having a dew point of 65°C was fed to each cathode 17 at such a flow rate that the oxygen utilization was 40%. At the time, the voltage of each of the cells 11 and 111 during their constant current operation was measured by using an electronic load unit (PLZ-664WA manufactured by KIKUSUI ELECTRONICS CORP.). During the measurement, the electrical resistance of each of the cells 11 and 111 was measured in situ by a low resistance meter having a fixed frequency of 1 kHz.

The measurement results are described with reference to Fig. 14. Fig. 14 shows voltage-current characteristics of each of the cells 11 and 111 before and after the test shown in Fig. 11 (the gas replacement cycle test) was conducted, in which test the series of first to third mode treatments was repeated 1000 times. Hereinafter, the voltage before the gas replacement cycle test is referred to as a pre-test voltage, and the voltage after the gas replacement cycle test is referred to as a post-test voltage.

At current densities lower than 0.4A/cm², although the pre-test voltage of the cell 11 was slightly lower than that of the cell 111, the post-test voltage of the cell 11 was substantially the same value as the post-test voltage of the cell 111, and thus the cell 11 exhibited substantially the same performance as the cell 111. The ECSA retention per unit mass at 0.9 V of the cell 11 and that of the cell 111 calculated from Fig. 14 were 51.4% and 39.1%, respectively. These values are substantially the same as the ECSA retention values obtained from Fig. 12. Therefore, it is considered that deterioration in the performance of the cell 11 at low current densities was due to decrease in ECSA.

At high current densities not lower than 0.4 A/cm², the post-test voltage of the cell 11 was higher than that of the cell 111, and thus the cell 11 exhibited higher performance than the cell 111. The difference between the post-test voltage of the cell 11 and the post-test voltage of the cell 111 increased in accordance with increase in the current density. It is considered that such increase in the post-test voltage difference was due to corrosion of the cathode 17 of each of the cells 11 and 111.

The corrosion is described with reference to Fig. 15A, Fig. 15B, and Fig. 15C. Fig. 15A is a sectional view of the cathode catalyst layer 20 and the polymer electrolyte membrane 15 of the cell 111 before the gas replacement cycle test. Fig. 15B is a sectional view of the cathode catalyst layer 20 and the polymer electrolyte membrane 15 of the cell 11 after the gas replacement cycle test. Fig. 15C is a sectional view of the cathode catalyst layer 20 and the polymer electrolyte membrane 15 of the cell 111 after the gas replacement cycle test. These sectional views were obtained by using a scanning electron microscope (SEM). Hereinafter, the cell 11 before the gas replacement cycle test is referred to as a pre-test cell 11; the cell 11 after the gas replacement cycle test is referred to as a post-test cell 11; the cell 111 before the gas replacement cycle test is referred to as a pre-test cell 111; and the cell 111 after the gas replacement cycle test is referred to as a post-test cell 111.

As shown in Fig. 15B and Fig. 15C, the formation of a band of platinum particles was found. This band was formed as a result of platinum ions dissociating from the cathode catalyst layer 20, entering the polymer electrolyte membrane 15, and being transformed into metal platinum due to crossover hydrogen. This coincides with the fact that decrease in ECSA was found not only in the cell 111 but also in the cell 11. It should be noted that this suggests that platinum dissociation occurs even at the cathode 17 of the cell 11.

The thickness of the cathode catalyst layer 20 of the post-test cell 11 was substantially the same as the thickness of the cathode catalyst layer 20 of the pre-test cell 111. On the other hand, the thickness of the cathode catalyst layer 20 of the post-test cell 111 was reduced by about 40% compared to the thickness of the cathode catalyst layer 20 of the pre-test cell 111. In addition, the cathode catalyst layer of the post-test cell 111 easily detached from the polymer electrolyte membrane 15. Such detachment of the cathode catalyst layer 20 from the polymer electrolyte membrane 15 was not seen in the post-test cell 11.

Consequently, it is understood that the carbon of the cathode catalyst layer 20 of the cell 111 corroded to a greater degree than the carbon of the cathode catalyst layer 20 of the cell 11. The corrosion of the cathode catalyst layer 20 causes significant reduction in mass transfer. Thus, the difference in performance between the cell 11 and the cell 111 at high current densities is due to the difference between the cell 11 and the cell 111 in terms of the degree of corrosion of the carbon of the cathode catalyst layer 20 in the gas replacement cycle test.

### Industrial Applicability

The cell, the fuel cell stack, the fuel cell system, and the membrane electrode assembly of the present invention are useful, for example, as a cell, a fuel cell stack, a fuel cell system, and a membrane electrode assembly that are capable of suppressing deterioration in power generation performance while suppressing increase in their size and cost.

### Reference Signs List

10 fuel cell stack
11 cell
12 MEA (membrane electrode assembly)
13 anode-side separator (separator)
14 cathode-side separator (separator)
15 polymer electrolyte membrane
19 anode catalyst layer
20 cathode catalyst layer
23 anode-side channel (channel)
24 cathode-side channel (channel)
100 fuel cell system

## Claims

1. A cell comprising:
a membrane electrode assembly (12); and
a pair of separators (13, 14), between which the membrane electrode assembly (12) is interposed, wherein
the membrane electrode assembly (12) includes a polymer electrolyte membrane (15), an anode catalyst layer (19) disposed on a first main surface of the polymer electrolyte membrane (15), and a cathode catalyst layer (20) disposed on a second main surface of the polymer electrolyte membrane (15),
the anode catalyst layer (19) contains a first catalyst material having an activity against a hydrogen oxidation reaction and a first electrically conductive material whose electrical resistance under a hydrogen atmosphere and whose electrical resistance under an oxygen atmosphere are different from each other,
the first catalyst material is supported on a surface of the first electrically conductive material,
the first electrically conductive material is a titanium oxide doped with a dissimilar metal,
the cathode catalyst layer (20) contains a second catalyst material having an activity against an oxygen reduction reaction and a second electrically conductive material different from the first electrically conductive material, and
an electrical resistance of the cell when the anode catalyst layer (19) is under an oxygen atmosphere is more than twice the electrical resistance of the cell when the anode catalyst layer (19) is under a hydrogen atmosphere.

2. The cell according to claim 1, wherein the anode catalyst layer (19) contains an ion-conductive binder.

3. The cell according to claim 1 or 2, wherein
the second electrically conductive material is carbon.

4. The cell according to any one of claims 1 to 3, wherein
the first electrically conductive material is formed as particles, and
an average primary diameter of the particles is not smaller than 10 nm and not greater than 1000 nm.

5. The cell according to any one of claims 1 to 4, wherein the first catalyst material contains platinum or a platinum alloy.

6. The cell according to any one of claims 1 to 5, wherein
the first catalyst material is formed as particles, and
an average primary diameter of the particles is not smaller than 1 nm and not greater than 10 nm.

7. The cell according to any one of claims 1 to 6, wherein the electrical resistance of the cell when the anode catalyst layer (19) is under an oxygen atmosphere is nine times or more as high as the electrical resistance of the cell when the anode catalyst layer (19) is under a hydrogen atmosphere.

8. The cell according to any one of claims 1 to 7, wherein the second electrically conductive material has a lower resistance-changing property than that of the first electrically conductive material.

9. The cell according to any one of claims 1 to 8, wherein the second electrically conductive material is carbon black.

10. A fuel cell stack comprising a plurality of the cells according to any one of claims 1 to 9, the cells being stacked together.

11. A fuel cell system comprising:
a fuel cell stack (10) including a plurality of the cells (11) according to any one of claims 1 to 9, the cells being stacked together;
a fuel gas supply device (30) configured to supply a fuel gas to one channel of the pair of separators (13, 14); and
an oxidant gas supply device (50) configured to supply an oxidant gas to another channel of the pair of separators (13, 14).

12. A membrane electrode assembly comprising:
a polymer electrolyte membrane (15);
an anode catalyst layer (19) disposed on a first main surface of the polymer electrolyte membrane (15); and
a cathode catalyst layer (20) disposed on a second main surface of the polymer electrolyte membrane (15), wherein
the anode catalyst layer (19) containsa first catalyst material having an activity against a hydrogen oxidation reaction and a first electrically conductive material whose electrical resistance under a hydrogen atmosphere and whose electrical resistance under an oxygen atmosphere are different from each other,
the first catalyst material is supported on a surface of the first electrically conductive material,
the first electrically conductive material is a titanium oxide doped with a dissimilar metal,
the cathode catalyst layer (20) contains a second catalyst material having an activity against an oxygen reduction reaction and a second electrically conductive material different from the first electrically conductive material, and
an electrical resistance of the cell when the anode catalyst layer (19) is under an oxygen atmosphere is more than twice the electrical resistance of the cell when the anode catalyst layer (19) is under a hydrogen atmosphere.

## Patentansprüche

1. Zelle, die umfasst:
eine Membran-Elektroden-Einheit (12); sowie
ein Paar von Separatoren (13, 14), zwischen denen die Membran-Elektroden-Einheit (12) angeordnet ist, wobei
die Membran-Elektroden-Einheit (12) eine Polymer-Elektrolyt-Membran (15), eine Anoden-Katalysatorschicht (19), die an einer ersten Hauptfläche der Polymer-Elektrolyt-Membran (15) angeordnet ist, sowie eine Kathoden-Katalysatorschicht (20) einschließt, die an einer zweiten Hauptfläche der Polymer-Elektrolyt-Membran (15) angeordnet ist,
die Anoden-Katalysatorschicht (19) ein erstes Katalysator-Material, das eine Aktivität gegen eine Wasserstoff-Oxidationsreaktion aufweist, sowie ein erstes elektrisch leitendes Material enthält, dessen elektrischer Widerstand in einer Wasserstoffatmosphäre und dessen elektrischer Widerstand in einer Sauerstoffatmosphäre voneinander verschieden sind,
das erste Katalysator-Material von einer Oberfläche des ersten elektrisch leitenden Materials getragen wird,
das erste elektrisch leitende Material ein mit einem ungleichen Metall dotiertes Titanoxid ist,
die Kathoden-Katalysatorschicht (20) ein zweites Katalysator-Material, das eine Aktivität gegen eine Sauerstoff-Reduktionsreaktion aufweist, sowie ein zweites elektrisch leitendes Material enthält, das sich von dem ersten elektrisch leitenden Material unterscheidet, und
ein elektrischer Widerstand der Zelle, wenn sich die Anoden-Katalysatorschicht (19) in einer Sauerstoffatmosphäre befindet, mehr als doppelt so hoch ist wie der elektrische Widerstand der Zelle, wenn sich die Anoden-Katalysatorschicht (19) in einer Wasserstoffatmosphäre befindet.

2. Zelle nach Anspruch 1, wobei die Anoden-Katalysatorschicht (19) ein ionenleitendes Bindemittel enthält.

3. Zelle nach Anspruch 1 oder 2, wobei
das zweite elektrisch leitende Material Kohlenstoff ist.

4. Zelle nach einem der Ansprüche 1 bis 3, wobei
das erste elektrisch leitende Material in Form von Partikeln ausgebildet ist, und
ein durchschnittlicher Primärdurchmesser der Partikel nicht kleiner als 10 nm und nicht größer als 1.000 nm ist.

5. Zelle nach einem der Ansprüche 1 bis 4, wobei das erste Katalysator-Material Platin oder eine Platinlegierung enthält.

6. Zelle nach einem der Ansprüche 1 bis 5, wobei
das erste Katalysator-Material in Form von Partikeln ausgebildet ist, und
ein durchschnittlicher Primärdurchmesser der Partikel nicht kleiner als 1 nm und nicht größer als 10 nm ist.

7. Zelle nach einem der Ansprüche 1 bis 6, wobei der elektrische Widerstand der Zelle, wenn sich die Anoden-Katalysatorschicht (19) in einer Sauerstoffatmosphäre befindet, neunmal oder mehr so hoch ist wie der elektrische Widerstand der Zelle, wenn sich die Anoden-Katalysatorschicht (19) in einer Wasserstoffatmosphäre befindet.

8. Zelle nach einem der Ansprüche 1 bis 7, wobei das zweite elektrisch leitende Material ein schwächeres Widerstandsänderungsvermögen aufweist als das erste elektrisch leitende Material.

9. Zelle nach einem der Ansprüche 1 bis 8, wobei das zweite elektrisch leitende Material Ruß ist.

10. Brennstoffzellenstapel, der eine Vielzahl von Zellen nach einem der Ansprüche 1 bis 9 umfasst, wobei die Zellen zusammen gestapelt sind.

11. Brennstoffzellen-System, das umfasst:
einen Brennstoffzellenstapel (10), der eine Vielzahl von Zellen (11) nach einem der Ansprüche 1 bis 9 umfasst, wobei die Zellen zusammen gestapelt sind;
eine Brennstoffgas-Zuführeinrichtung (30), die so ausgeführt ist, dass sie einem Kanal der paarigen Separatoren (13, 14) ein Brennstoffgas zuführt; sowie eine Oxidantgas-Zuführeinrichtung (50), die so ausgeführt ist, dass sie einem anderen Kanal der paarigen Separatoren (13, 14) ein Oxidantgas zuführt.

12. Membran-Elektroden-Einheit, die umfasst:
eine Polymer-Elektrolyt-Membran (15);
eine Anoden-Katalysatorschicht(19), die an einer ersten Hauptfläche der Polymer-Elektrolyt-Membran (15) angeordnet ist; sowie
eine Kathoden-Katalysatorschicht (20), die an einer zweiten Hauptfläche der Polymer-Elektrolyt-Membran (15) angeordnet ist; wobei
die Anoden-Katalysatorschicht (19) ein erstes Katalysator-Material, das eine Aktivität gegen eine Wasserstoff-Oxidationsreaktion aufweist, sowie ein erstes elektrisch leitendes Material enthält, dessen elektrischer Widerstand in einer Wasserstoffatmosphäre und dessen elektrischer Widerstand in einer Sauerstoffatmosphäre voneinander verschieden sind,
das erste Katalysator-Material von einer Oberfläche des ersten elektrisch leitenden Materials getragen wird,
das erste elektrisch leitende Material ein mit einem ungleichen Metall dotiertes Titanoxid ist,
die Kathoden-Katalysatorschicht (20) ein zweites Katalysator-Material, das eine Aktivität gegen eine Sauerstoff-Reduktionsreaktion aufweist, sowie ein zweites elektrisch leitendes Material enthält, das sich von dem ersten elektrisch leitenden Material unterscheidet, und
ein elektrischer Widerstand der Zelle, wenn sich die Anoden-Katalysatorschicht (19) in einer Sauerstoffatmosphäre befindet, mehr als doppelt so hoch ist wie der elektrische Widerstand der Zelle, wenn sich die Anoden-Katalysatorschicht (19) in einer Wasserstoffatmosphäre befindet.

## Revendications

1. Cellule comprenant :
un assemblage membrane-électrode (12) ; et
une paire de séparateurs (13, 14), entre lesquels l'assemblage membrane-électrode (12) est interposé, dans laquelle
l'assemblage membrane-électrode (12) inclut une membrane électrolytique polymère (15), une couche catalytique anodique (19) disposée sur une première surface principale de la membrane électrolytique polymère (15), et une couche catalytique cathodique (20) disposée sur une deuxième surface principale de la membrane électrolytique polymère (15),
la couche catalytique anodique (19) contient un premier matériau catalytique ayant une activité contre une réaction d'oxydation de l'hydrogène et un premier matériau électriquement conducteur dont la résistance électrique sous une atmosphère d'hydrogène et la résistance électrique sous une atmosphère d'oxygène sont différentes l'une de l'autre,
le premier matériau catalytique est supporté sur une surface du premier matériau électriquement conducteur,
le premier matériau électriquement conducteur est un oxyde de titane dopé avec un métal différent,
la couche catalytique cathodique (20) contient un deuxième matériau catalytique ayant une activité contre une réaction de réduction de l'oxygène et un deuxième matériau électriquement conducteur différent du premier matériau électriquement conducteur, et
la résistance électrique de la cellule lorsque la couche catalytique anodique (19) est sous atmosphère d'oxygène est plus de deux fois supérieure à la résistance électrique de la cellule lorsque la couche catalytique anodique (19) est sous atmosphère d'hydrogène.

2. Cellule selon la revendication 1, dans laquelle la couche catalytique anodique (19) contient un liant conducteur d'ions.

3. Cellule selon la revendication 1 ou 2, dans laquelle
le deuxième matériau électriquement conducteur est du carbone.

4. Cellule selon l'une quelconque des revendications 1 à 3, dans laquelle
le premier matériau électriquement conducteur est formé de particules, et
le diamètre primaire moyen des particules n'est pas inférieur à 10 nm ni supérieur à 1 000 nm.

5. Cellule selon l'une quelconque des revendications 1 à 4, dans laquelle le premier matériau catalytique contient du platine ou un alliage de platine.

6. Cellule selon l'une quelconque des revendications 1 à 5, dans laquelle
le premier matériau catalytique est formé de particules, et
le diamètre primaire moyen des particules n'est pas inférieur à 1 nm ni supérieur à 10 nm.

7. Cellule selon l'une quelconque des revendications 1 à 6, dans laquelle la résistance électrique de la cellule lorsque la couche catalytique anodique (19) est sous atmosphère d'oxygène est neuf fois ou plus élevée que la résistance électrique de la cellule lorsque la couche catalytique anodique (19) est sous atmosphère d'hydrogène.

8. Cellule selon l'une quelconque des revendications 1 à 7, dans laquelle le deuxième matériau électriquement conducteur a une propriété de changement de résistance inférieure à celle du premier matériau électriquement conducteur.

9. Cellule selon l'une quelconque des revendications 1 à 8, dans laquelle le deuxième matériau électriquement conducteur est du noir de carbone.

10. Pile à combustible comprenant une pluralité de cellules selon l'une quelconque des revendications 1 à 9, les cellules étant empilées les unes sur les autres.

11. Système de pile à combustible comprenant :
un empilement de piles à combustible (10) incluant une pluralité de cellules (11) selon l'une quelconque des revendications 1 à 9, les cellules étant empilées les unes sur les autres ;
un dispositif d'alimentation en gaz combustible (30) configuré pour alimenter en gaz combustible un canal de la paire de séparateurs (13, 14) ; et
un dispositif d'alimentation en gaz oxydant (50) configuré pour fournir un gaz oxydant à un autre canal de la paire de séparateurs (13, 14).

12. Assemblage membrane-électrode comprenant :
une membrane électrolytique polymère (15) ;
une couche catalytique anodique (19) disposée sur une première surface principale de la membrane électrolytique polymère (15) ; et
une couche catalytique cathodique (20) disposée sur une deuxième surface principale de la membrane électrolytique polymère (15), dans lequel
la couche catalytique anodique (19) contient un premier matériau catalytique ayant une activité contre une réaction d'oxydation de l'hydrogène et un premier matériau électriquement conducteur dont la résistance électrique sous une atmosphère d'hydrogène et la résistance électrique sous une atmosphère d'oxygène sont différentes l'une de l'autre,
le premier matériau catalytique est supporté sur une surface du premier matériau électriquement conducteur,
le premier matériau électriquement conducteur est un oxyde de titane dopé avec un métal différent,
la couche catalytique cathodique (20) contient un deuxième matériau catalytique ayant une activité contre une réaction de réduction de l'oxygène et un deuxième matériau électriquement conducteur différent du premier matériau électriquement conducteur, et
la résistance électrique de la cellule lorsque la couche catalytique anodique (19) est sous atmosphère d'oxygène est plus de deux fois supérieure à la résistance électrique de la cellule lorsque la couche catalytique anodique (19) est sous atmosphère d'hydrogène.
